# EUROPEAN PATENT SPECIFICATION

(11) **EP 4 269 969 B1**
(45) Date of publication and mention of the grant of the patent: **11.11.2026**
(21) Application number: 21910993.1
(22) Date of filing: 23.12.2021
(51) Int. Cl.: G01K 11/20, G01N 25/00, B82Y 5/00, B82Y 15/00, C01B 32/00, C09K 11/00, C09K 11/59, C09K 11/66, C09K 11/65, C01B 32/26

(54) **TEMPERATURE SENSITIVE PROBE**
TEMPERATUREMPFINDLICHE SONDE
SONDE SENSIBLE À LA TEMPÉRATURE

(30) Priority: 25.12.2020 JP 2020216735
(43) Date of publication of application: 01.11.2023
(73) Proprietor: Daicel Corporation, Osaka 530-0011 (JP); Kyoto University, Kyoto-shi, Kyoto 606-8501 (JP)
(72) Inventor: NISHIKAWA, Masahiro, Tokyo 108-8230 (JP); LIU, Ming, Tokyo 108-8230 (JP); MIZUOCHI, Norikazu, Kyoto-shi, Kyoto 606-8501 (JP); OHKI, Izuru, Kyoto-shi, Kyoto 606-8501 (JP); FUJIWARA, Masanori, Kyoto-shi, Kyoto 606-8501 (JP)
(74) Representative: Grünecker Patent- und Rechtsanwälte PartG mbB
(86) International application number: PCT/JP2021/047991
(87) International publication number: WO 2022/138854

(56) References cited:
- WO-A1-2013/094748
- WO-A1-2020/195999
- CA-A1- 3 134 686
- NGUYEN CHRISTIAN T ET AL: "All-optical nanoscale thermometry with silicon-vacancy centers in diamond", APPLIED PHYSICS LETTERS, AMERICAN INSTITUTE OF PHYSICS, 2 HUNTINGTON QUADRANGLE, MELVILLE, NY 11747, vol. 112, no. 20, 15 May 2018 (2018-05-15), XP012228510, ISSN: 0003-6951, [retrieved on 20180515], DOI: 10.1063/1.5029904
- YUKAWA HIROSHI ET AL: "A quantum thermometric sensing and analysis system using fluorescent nanodiamonds for the evaluation of living stem cell functions according to intracellular temperature", NANOSCALE ADVANCES, vol. 2, no. 5, 1 January 2020 (2020-01-01), pages 1859 - 1868, XP093211701, ISSN: 2516-0230, DOI: 10.1039/D0NA00146E
- ALKAHTANI MASFER H. ET AL: "Fluorescent nanodiamonds: past, present, and future", NANOPHOTONICS, vol. 7, no. 8, 28 July 2018 (2018-07-28), pages 1423 - 1453, XP055791411, DOI: 10.1515/nanoph-2018-0025
- NGUYEN CHRISTIAN T.; EVANS RUFFIN E.; SIPAHIGIL ALP; BHASKAR MIHIR K.; SUKACHEV DENIS D.; AGAFONOV VIATCHESLAV N.; DAVYDOV VALERY : "All-optical nanoscale thermometry with silicon-vacancy centers in diamond", APPLIED PHYSICS LETTERS, AMERICAN INSTITUTE OF PHYSICS, 2 HUNTINGTON QUADRANGLE, MELVILLE, NY 11747, vol. 112, no. 20, 15 May 2018 (2018-05-15), 2 Huntington Quadrangle, Melville, NY 11747, XP012228510, ISSN: 0003-6951, DOI: 10.1063/1.5029904

## Description

### Technical Field

The present invention relates to a temperature-sensitive probe for intracellular temperature measurement.

### Background Art

Many chemical reactions occurring in the process of extracting energy by metabolism in cells largely depend on the temperature. As in such an instance, chemical reactions in cells are controlled by intracellular and extracellular temperatures. For example, abnormal thermogenesis in certain types of cancer cells has been reported. Utilizing this phenomenon allows distinguishing between cancer cells with high metabolic activity and normal cells without such high metabolic activity through temperature measurement.

In addition, temperature measurement of cells is also important in fermentation utilizing microorganisms.

Non-Patent Literature 1 describes temperature measurement performed using 200 nm-sized fluorescent nanodiamond particles with silicon-vacancy (SiV) centers. Non-Patent Literature 2 discloses intracellular thermometry techniques. In particular, a quantum thermometric sensing and analysis system (QTAS) using fluorescent nanodiamonds (FNDs) is described. The peak of FNDs was confirmed at approximately 2.87 GHz with the characteristic fluorescence spectra of NV centers that could be optically detected. Non-Patent Literature 3 describes multi-color fluorescent nanodiamonds (FNDs) as fluorescent markers for biomedical applications. Patent Literature 1 discloses a method for producing nanodiamonds doped with a Group 14 element which includes: a detonation step for obtaining nanodiamonds which have been doped with one or more Group 14 elements selected from the group consisting of Si, Ge, Sn and Pb by causing the explosion in a sealed container of an explosive composition which contains one or more types of explosives and one or more Group 14 element compounds; and a step for removing the Group 14 element and/or oxide thereof by subjecting the nanodiamonds which have been doped with a Group 14 element to an alkali treatment.

### Citation List

### Non-Patent Literature

Non-Patent Literature 1: APPLIED PHYSICS LETTERS, 112, 203102 (2018)
Non-Patent Literature 2: NANOSCALE ADVANCES, 2, 1859 (2020)
Non-Patent Literature 3: NANOPHOTONICS, 7, 1423 (2018)

### Patent Literature

Patent Literature 1: CA 3 134 686 A1

### Summary of Invention

### Technical Problem

Temperature measurements in micro regions using temperature dependence of an emission wavelength of a molecule or the like have been studied so far, which have a problem that molecules are generally unstable, resulting in light emission blinking, for example. Temperature measurement using NV centers in diamond has been studied but requires a microwave to manipulate spins.

An object of the present invention is to provide a temperature-sensitive probe capable of stably and accurately measuring the temperature in a micro space.

### Solution to Problem

An embodiment according to the present invention provides a temperature-sensitive probe below.
[1] A temperature-sensitive probe for intracellular temperature measurement containing a group 14 element-doped nanodiamond having an average particle size of 1 to 100 nm and including MV centers, wherein M represents a group 14 element selected from the group consisting of Si, Ge, Sn, and Pb, and V represents a vacancy.
[2] The temperature-sensitive probe according to [1], wherein M is Si.
[3] The temperature-sensitive probe according to [1] or [2], wherein a standard relative deviation (RSD) of the particle size is from 25 to 40%.
[4] The temperature-sensitive probe according to any one of [1] to [3], wherein the group 14 element-doped nanodiamond has a spherical shape.
[5] The temperature-sensitive probe according to any one of [1] to [4], wherein a concentration of the MV centers is 1 x 10¹⁴/cm³ or higher.
[6] Use of a group 14 element-doped nanodiamond for measurement of a temperature in a micro space, wherein the micro space is a cell or an intracellular organelle, the nanodiamond having an average particle size of 1 to 100 nm and including MV centers, wherein M represents a group 14 element selected from the group consisting of Si, Ge, Sn, and Pb, and V represents a vacancy.

### Advantageous Effects of Invention

An embodiment of the present invention enables temperature measurement of a limited micro space as typified by an intracellular organelle. This utilizes a finding that a zero phonon line (ZPL) peak position of the MV centers shifts depending on the temperature. The MV centers have advantages of being stably present and having high emission intensity.

The temperature-sensitive probe for intracellular temperature measurement according to an embodiment of the present invention can finely set a temperature response region in a cell by being uniformly dispersed in the cell or disposed or bound to a specific site and can be utilized as an intracellular fluorescent temperature sensor.

### Brief Description of Drawings

FIG. 1 is a fluorescence spectrum of a silicon-doped nanodiamond with SiV centers (ZPL at 738 nm).
FIG. 2 is a confocal microscope fluorescence image when the silicon-doped nanodiamond with SiV centers is irradiated with an excitation light (532 nm).
FIG. 3 is a fluorescence spectrum of the silicon-doped nanodiamond with SiV centers measured with an excitation light wavelength of 532 nm, an excitation light power of 100 µW, and an ND filter of OD 1.0.
FIG. 4 is a graph showing temperature response measurement data of the SiV fluorescent ND.
FIG. 5 is a diagram illustrating a confocal microscope apparatus for temperature measurement (equipped with a hot plate and a lens heater).
FIG. 6 is a fluorescence spectrum of a germanium-doped nanodiamond with GeV centers measured with an excitation light wavelength of 532 nm, an excitation light power of 100 µW, and an ND filter of OD 1.0.
FIG. 7 is a graph showing temperature response measurement data of the GeV fluorescent ND.

### Description of Embodiments

A temperature-sensitive probe for intracellular temperature measurement according to an embodiment of the present invention includes a group 14 element-doped nanodiamond having an average particle size of 1 to 100 nm and including MV centers, where M represents a group 14 element selected from the group consisting of Si, Ge, Sn, and Pb, and V represents a vacancy.

The group 14 element-doped nanodiamond is nanoparticles, and the upper limit of the average particle size is 100 nm, more preferably 70 nm, even more preferably 50 nm, particularly preferably 30 nm, more particularly preferably 20 nm, and most preferably 10 nm, and the lower limit of the average particle size is 1 nm, more preferably 1.5 nm, even more preferably 2 nm, and particularly preferably 3 nm. The group 14 element-doped nanodiamond having a smaller average particle size does not interfere with the movement or structural change of a biomolecule, such as an intracellular protein, and thus is preferred.

The standard relative deviation (RSD) of the particle size of the group 14 element-doped nanodiamond is preferably from 25 to 40%. The average particle size and the standard relative deviation (RSD) can be measured by small angle X-ray scattering (SAXS). The relative standard deviation (%) can be determined by the following equation. [Math. 1] $Relative standard deviation \left(%\right) = \left(standard deviation/average particle size\right) \times 100$

The temperature-sensitive probe according to an embodiment of the present invention is suitable for temperature measurement in a micro space, and not only can measure the temperature of a whole cell but also can distinctively measure the temperatures of intracellular organelles (e.g., an endoplasmic reticulum, a mitochondrion, a Golgi apparatus, a peroxisome, a lysosome, a microtubule, and a microbody). Examples of the cell for temperature measurement include microorganisms, such as yeast; animal cells; and plant cells, and the temperature-sensitive probe according to an embodiment of the present invention can be easily introduced into these cells. The temperature-sensitive probe according to an embodiment of the present invention utilizes a finding that a fluorescence peak position during excitation light irradiation shifts depending on the temperature. The temperature-sensitive probe detects the temperature by fluorescence (ZPL) at or near 738 nm originating from SiV centers. The fluorescence at or near 738 nm is hardly absorbed by cells or their organelles and thus is suitable for measuring intracellular temperature. Fluorescences of a GeV center with a ZPL at 602 nm, a SnV center with a ZPL at 620 nm, and a PbV center with ZPLs at 520 nm and 552 nm have high intensities, thus enabling measurement of intracellular temperature.

The "cell" in an embodiment of the present invention includes prokaryotic cells and eukaryotic cells according to the general classification and does not particularly depend on the species of the organism. For example, prokaryotic cells are classified into eubacteria and archaebacteria. Eubacteria are broadly classified among others into Gram-positive bacteria, such as Actinobacteria; and Gram-negative bacteria, such as Proteobacteria. The thickness of the peptidoglycan layer and the like do not limit the range of application of the temperature-sensitive probe. In addition, eukaryotic cells mainly include cells belonging to eukaryotes (protists, fungi, plants, and animals). For example, yeast, which is commonly utilized in studies of molecular biology and the like and also industrially utilized, belongs to fungi.

To accurately measure the temperature in a limited micro space as typified by an intracellular space, the fluorescence (ZPL) peak position at or near 738 nm at various temperatures (e.g., from 35°C to 40°C when the measurement object is a cell) is measured, and the temperature of the measurement object can be determined based on the result.

When the temperature in an intracellular micro space is measured, the temperature-sensitive probe is applied to or introduced into a measurement object, then excess particles of the temperature-sensitive probe are removed, for example, by washing, and then the temperature of the measurement object (e.g., a cell) can be measured. For example, measurement of the difference in temperatures of individual cells in a mammalian cell population enables a grasp of the physiological state of each cell.

When the temperature in a micro space is measured, the fluorescence (ZPL) peak position at or near the ZPL of the MV centers at each temperature is measured to plot a calibration curve, and the temperature can be determined based on the calibration curve. Plotting of the calibration curve can be performed by heating and cooling the group 14 element-doped nanodiamond particles supported on or applied onto a substrate but can also be performed, for example, in an environment (e.g., such as ionic strength and pH) similar to an intracellular micro space. The calibration curve can be plotted by changing the measurement conditions according to the measurement object. Specifically, the calibration curve to be used is not limited regardless of the measurement conditions for plotting of the calibration curve, but for example, a curve created by plotting the change in fluorescence intensity of the temperature-sensitive probe over the temperature in a potassium chloride solution that mimics intracellular conditions can be used. More specifically, when a thermal response test is performed using a cell population with the temperature-sensitive probe introduced to plot the change in the fluorescence (ZPL) peak position, a method can be exemplified in which cells are maintained at a specific temperature for a certain period of time by suspending them in a state where their active metabolic activities are depressed, for example, in water or in a buffer solution containing a compound that cannot be assimilated by the cells, and the fluorescence intensity is measured under conditions where the external temperature and the intracellular temperature are considered to have reached equilibrium.

The temperature-sensitive probe according to an embodiment of the present invention can be applied to various fields of research and development. For example, in the field of biotechnology, adding intracellular temperature, which has been difficult to measure accurately so far, to analytical parameters is expected to improve the efficiency of investigation of culture conditions in the fermentation production of useful substances using microorganisms.

The temperature-sensitive probe according to an embodiment of the present invention can be applied to various medical applications. For example, using the temperature-sensitive probe according to an embodiment of the present invention on a part of a patient's tissue also enables distinguishing between cancer cells, which are found to produce a large amount of heat, and normal cells, which are not. Further applying this allows the temperature-sensitive probe to be used also for development of more effective thermotherapy. Alternatively, a material that activates brown adipocytes effective for burning fat by energy consumption can be screened by introducing the temperature-sensitive probe according to an embodiment of the present invention into brown adipocytes, which produce a large amount of heat, and measuring temperature change caused by adding various materials to the cells. Such materials are useful for body weight reduction or slimming by promoting fat burning.

The temperature-sensitive probe according to an embodiment of the present invention can also be applied to the elucidation of various physiological phenomena. For example, investigation of the correlation between a transient receptor potential (TRP) channel, which is a receptor sensing temperature outside the living body and causing a biological reaction, and the intracellular temperature is expected to lead an activation of the TRP channel by an approach different from the approach known in the art. In addition, investigation of the relationship between the intracellular temperature distribution and biological reactions occurring inside and outside the cell enables investigation of the effect of the local temperature distribution on the biological reaction and also enables control of cells by local heating using an infrared laser or the like.

Furthermore, the temperature-sensitive probe according to an embodiment of the present invention is not toxic and thus can be used without concern in microorganisms, animal cells or plant cells, or mammalian cells, such as human, mouse, or rat cells.

An embodiment not claimed can further provide a method for measuring intracellular temperature, the method including:
(a) mixing the temperature-sensitive probe described in any one of [1] to [4] with cells in water to introduce the temperature-sensitive probe into the cells;
(b) irradiating the cells into which the temperature-sensitive probe is introduced with an excitation light, and measuring a fluorescence (ZPL) peak position of a ZPL of MV centers, where M represents a group 14 element selected from the group consisting of Si, Ge, Sn, and Pb, and V represents a vacancy; and
(c) determining a temperature from the measured fluorescence intensity. Examples of the wavelength of the excitation light include 532 nm and 633 nm.

The group 14 element-doped nanodiamond can be preferably produced by a detonation method. The shape of the group 14 element-doped nanodiamond is preferably spherical, ellipsoidal, or polyhedral close to those.

The amount of the group 14 element (M) atoms introduced into the group 14 element-doped nanodiamond according to an embodiment of the present invention (number of doped atoms (M)/number of C atoms) x 100 [%]) is preferably from 0.5 to 40% and more preferably from 1 to 36%.

Vacancies can be introduced into the group 14 element-doped nanodiamond by ion beam irradiation or electron beam irradiation. The upper limit of the concentration of the vacancies to be introduced is preferably 1 x 10²¹/cm³ or less, at which the structure of diamond can be maintained, and the lower limit of the concentration of the vacancies is, for example, 1 x 10¹⁶/cm³ or higher, 5 x 10¹⁶/cm³ or higher, 1 x 10¹⁷/cm³ or higher, 5 x 10¹⁷/cm³ or higher, or 1 x 10¹⁸/cm³ or higher. The ion beam is preferably an ion beam of hydrogen (H) or helium (He). For example, the energy of the ion beam of hydrogen is preferably from 10 to 1500 keV, and the energy of the ion beam of helium is preferably from 20 to 2000 keV. The energy of the electron beam is preferably from 500 to 5000 keV. By irradiating the group 14 element-doped nanodiamond with an ion beam or an electron beam, a vacancy is formed, and the vacancy (V) and the doped group 14 element (M) form an MV center that emits fluorescence. The resulting MV center exhibits a sharp peak called a zero phonon line (ZPL) that accounts for the majority of the emission in the emission spectrum and shows a small peak width. Thus, the MV center is less likely to be affected by noise due to autofluorescence. The SiV center has a ZPL at 738 nm located in what is called the biological window (a wavelength band where an excitation light or fluorescence penetrates the living body). This enables external excitation and external measurement, and thus the SiV center is an ideal luminescent center as a probe for bioimaging. The GeV center has a ZPL at 602 nm, the SnV center has a ZPL at 620 nm, and the PbV center has ZPLs at 520 nm and 552 nm.

The concentration of the MV centers in a preferred group 14 element-doped nanodiamond according to an embodiment of the present invention is preferably 1 x 10¹⁴/cm³ or higher and more preferably from 2 x 10¹⁴ to 1 x 10¹⁹/cm³.

The centers of the preferred group 14 element-doped nanodiamond particles according to an embodiment of the present invention have a diamond structure containing sp3 carbon and the doped group 14 element atom, and the surface is covered with an amorphous layer formed of sp2 carbon. In a more preferred embodiment, the outer side of the amorphous layer may be covered with a graphite oxide layer. Furthermore, a hydration layer may be formed between the amorphous layer and the graphite oxide layer.

In one preferred embodiment of the present invention, the group 14 element-doped nanodiamond particles have one type or two or more types of oxygen-containing functional groups on the surface thereof. Examples of the oxygen-containing functional group include OH, C=O, COOH, and -O-. These functional groups can be further modified by etherification, esterification, amidation, or the like.

In one preferred embodiment of the present invention, the group 14 element-doped nanodiamond has a positive or negative zeta potential. The zeta potential of the group 14 element-doped nanodiamond is preferably from -70 to 70 mV and more preferably from -60 to 30 mV.

The group 14 element-doped nanodiamond according to an embodiment of the present invention can be produced by a production method including: mixing an explosive material and a group 14 element compound, such as a silicon compound, a germanium compound, a tin compound, or a lead compound, in a sealed vessel; and exploding the resulting mixture in the presence of a cooling medium under conditions of negative oxygen balance.

The explosive material is not particularly limited, and a known explosive material from wide varieties can be used. Specific examples thereof include trinitrotoluene (TNT), cyclotrimethylene trinitramine (hexogen, RDX), cyclotetramethylene tetranitramine (octogen), trinitrophenyl methylnitramine (tetryl), pentaerythritol tetranitrate (PETN), tetranitromethane (TNM), triamino-trinitrobenzene, hexanitrostilbene, and diaminodinitrobenzofuroxan. One type of these can be used alone, or a combination of two or more types of these can be used.

For the group 14 element compound, any organic or inorganic compound having a group 14 element atom, such as silicon (Si), germanium (Ge), tin (Sn), or lead (Pb), from wide varieties can be used.

Examples of the organic silicon compound having silicon as the group 14 element include:
· silanes having a lower alkyl group, such as acetoxytrimethylsilane, diacetoxydimethylsilane, triacetoxymethylsilane, acetoxytriethylsilane, diacetoxydiethylsilane, triacetoxyethylsilane, acetoxytripropylsilane, methoxytrimethylsilane, dimethoxydimethylsilane, trimethoxymethylsilane, ethoxytrimethylsilane, diethoxydimethylsilane, triethoxymethylsilane, ethoxytriethylsilane, diethoxydiethylsilane, triethoxyethylsilane, and trimethylphenoxysilane;
· silanes having a halogen atom, such as trichloromethylsilane, dichlorodimethylsilane, chlorotrimethylsilane, trichloroethylsilane, dichlorodiethylsilane, chlorotriethylsilane, trichlorophenylsilane, dichlorodiphenylsilane, chlorotriphenylsilane, dichlorodiphenylsilane, dichloromethylphenylsilane, dichloroethylphenylsilane, chlorodifluoromethylsilane, dichlorofluoromethylsilane, chlorofluorodimethylsilane, chloroethyldifluorosilane, dichloroethylfluorosilane, chlorodifluoropropylsilane, dichlorofluoropropylsilane, trifluoromethylsilane, difluorodimethylsilane, fluorotrimethylsilane, ethyltrifluorosilane, diethyldifluorosilane, triethylfluorosilane, trifluoropropylsilane, fluorotripropylsilane, trifluorophenylsilane, difluorodiphenylsilane, fluorotriphenylsilane, tribromomethylsilane, dibromodimethylsilane, bromotrimethylsilane, bromotriethylsilane, bromotripropylsilane, dibromodiphenylsilane, and bromotriphenylsilane;
· polysilanes, such as hexamethyldisilane, hexaethyldisilane, hexapropyldisilane, hexaphenyldisilane, and octaphenylcyclotetrasilane;
silazanes, such as triethylsilazane, tripropylsilazane, triphenylsilazane, hexamethyldisilazane, hexaethyldisilazane, hexaphenyldisilazane, hexamethylcyclotrisilazane, octamethylcyclotetrasilazane, hexaethylcyclotrisilazane, octaethylcyclotetrasilazane, and hexaphenylcyclotrisilazane;
· aromatic silanes having a silicon atom incorporated into an aromatic ring, such as silabenzene and disilabenzene;
· hydroxyl group-containing silanes, such as trimethylsilanol, dimethylphenylsilanol, triethylsilanol, diethylsilanediol, tripropylsilanol, dipropylsilanediol, triphenylsilanol, and diphenylsilanediol;
· alkyl- or aryl-substituted silanes, such as tetramethylsilane, ethyltrimethylsilane, trimethylpropylsilane, trimethylphenylsilane, diethyldimethylsilane, triethylmethylsilane, methyltriphenylsilane, tetraethylsilane, triethylphenylsilane, diethyldiphenylsilane, ethyltriphenylsilane, and tetraphenylsilane;
· carboxyl group-containing silanes, such as triphenylsilylcarboxylic acid, trimethylsilylacetic acid, trimethylsilylpropionic acid, and trimethylsilylbutyric acid;
· siloxanes, such as hexamethyldisiloxane, hexaethyldisiloxane, hexapropyldisiloxane, and hexaphenyldisiloxane;
· silanes having an alkyl or aryl group and a hydrogen atom, such as methylsilane, dimethylsilane, trimethylsilane, diethylsilane, triethylsilane, tripropylsilane, diphenylsilane, and triphenylsilane; and
· tetrakis(chloromethyl)silane, tetrakis(hydroxymethyl)silane, tetrakis(trimethylsilyl)silane, tetrakis(trimethylsilyl)methane, tetrakis(dimethylsilanolyl)silane, tetrakis(tri(hydroxymethyl)silyl)silane, and tetrakis(nitratemethyl)silane.

Examples of the inorganic silicon compound include silicon oxide, silicon oxynitride, silicon nitride, silicon oxycarbide, silicon nitrocarbide, silane, and carbon materials doped with silicon. Examples of the carbon material doped with silicon include black lead, graphite, active carbon, carbon black, ketjen black, coke, soft carbon, hard carbon, acetylene black, carbon fibers, and mesoporous carbon.

Examples of the germanium compound include organic germanium compounds, such as methylgermane, ethylgermane, trimethylgermanium methoxide, dimethylgermanium diacetate, tributylgermanium acetate, tetramethoxygermanium, tetraethoxygermanium, tetraphenylgermane, isobutylgermane, alkylgermanium trichloride, and dimethylaminogermanium trichloride; germanium complexes, such as a nitrotriphenol complex (Ge₂(ntp)₂O), a catechol complex (Ge(cat)₂), or an aminopyrene complex (Ge₂(ap)₂Cl₂); and germanium alkoxides, such as germanium ethoxide and germanium tetrabutoxide.

Examples of the tin compound include inorganic tin compounds, such as tin(II) oxide, tin(IV) oxide, tin(II) sulfide, tin(IV) sulfide, tin(II) chloride, tin(IV) chloride, tin(II) bromide, tin(II) fluoride, tin acetate, and tin sulfate; alkyl tin compounds, such as tetramethyltin; monoalkyltin oxide compounds, such as monobutyltin oxide; dialkyltin oxide compounds, such as dibutyltin oxide; aryltin compounds, such as tetraphenyltin; and organic tin compounds, such as dimethyltin maleate, hydroxybutyltin oxide, and monobutyltin tris(2-ethylhexanoate).

Examples of the lead compound include inorganic lead compounds, such as lead monoxide (PbO), lead dioxide (PbO₂), minium (Pb₃O₄), white lead (2PbCO₃·Pb(OH)₂), lead nitrate (Pb(NO₃)₂), lead chloride (PbCl₂), lead sulfide (PbS), chrome yellow (PbCrO₄, Pb(SCr)O₄, PbO·PbCrO₄), lead carbonate (PbCO₃), lead sulfate (PbSO₄), lead fluoride (PbF₂), lead tetrafluoride (PbF₄), lead bromide (PbBr₂), and lead iodide (PbI₂); and organic lead compounds, such as lead acetate (Pb(CH₃COO)₂), lead tetracarboxylate (Pb(OCOCH₃)₄), tetraethyl lead (Pb(CH₃CH₂)₄), tetramethyl lead (Pb(CH₃)₄), and tetrabutyl lead (Pb(C₄H₉)₄).

One of the organic or inorganic group 14 element compounds may be used individually, or in combination of two or more.

The proportion of the explosive material in the mixture containing the explosive material and the group 14 element compound is preferably from 85 to 99.9 mass% and more preferably from 86 to 99 mass%, and the proportion of the group 14 element compound is preferably from 0.1 to 15 mass% and more preferably from 1 to 14 mass%. In addition, the group 14 element content in the mixture containing the explosive material and the group 14 element compound is preferably from 0.007 to 4.5 mass% and more preferably from 0.06 to 4.3 mass%. The mixture containing the explosive material and the group 14 element compound can further incorporate the above-mentioned carbon material containing no group 14 element.

When the explosive material and the group 14 element compound are solid, they may be mixed by powder mixing or may be mixed by dissolving or dispersing them in an appropriate solvent. They can be mixed by agitation, bead milling, an ultrasonic wave, or the like.

In one preferred embodiment, the mixture of the explosive material and the group 14 element compound further contains a cooling medium. The cooling medium may be any of a solid, a liquid, or a gas. Examples of the method of using the cooling medium include a method in which the mixture of the explosive material and the group 14 element compound is detonated in the cooling medium. Examples of the cooling medium include inert gases (nitrogen, argon, and CO), water, ice, liquid nitrogen, aqueous solutions of a group 14 element-containing salt, and crystalline hydrates. Examples of a silicon-containing salt included in the group 14 element-containing salt include ammonium hexafluorosilicate, ammonium silicate, and tetramethylammonium silicate. The cooling medium is preferably used in an amount approximately 5 times the weight of the explosive, for example, in the case of water or ice.

In one preferred embodiment of the present invention, the mixture containing the explosive material and the group 14 element compound is transformed into diamond through compression by shock waves under high pressure and high temperature conditions generated by explosion of the explosive material (detonation). At the time of explosion of the explosive material, the group 14 element is incorporated into the diamond lattice. The carbon source for the nanodiamond can be the explosive material and the organic group 14 element compound; however, in the case where the mixture containing the explosive material and the group 14 element compound further contains a carbon material containing no group 14 element, this carbon material can also be the carbon source for the nanodiamond.

The group 14 element-doped nanodiamond obtained by the detonation method can be purified and annealed according to common procedures.

### Examples

Hereinafter, the present invention will be described more specifically with reference to examples, but the present invention is not limited by these examples.

### Example 1

### (1) Synthesis of silicon-doped nanodiamond

A silicon-doped nanodiamond was produced by a detonation method according to a common procedure using TNT and cyclotrimethylenetrinitramine (hexogen, RDX) as the explosives and using, as the silicon compound, 0.21 mol of triphenylsilanol (SiPh₃OH) per mol of TNT under conditions of a temperature of 4092 K and a pressure of 32 GPa. As a result, a nanodiamond doped with 1% of silicon as determined by (Si atoms/C atoms) x 100 (%) and having SiV centers was obtained.

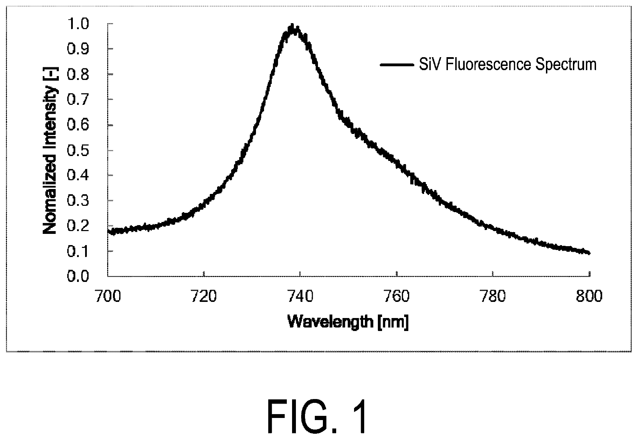

The fluorescence spectrum of the resulting silicon-doped nanodiamond with SiV centers is shown in FIG. 1.

To measure the fluorescence spectrum, the resulting evaluation sample was formed into a 1 wt.% aqueous dispersion, and a few drops of the dispersion were dropped on a glass plate and dried. The dried sample was set in a microscopic Raman spectrometer (trade name: Microscopic Laser Raman spectrometer LabRAM HR Evolution, available from Horiba, Ltd.), the SiV fluorescent nanodiamond was irradiated with an excitation light at 532 nm, and a fluorescence spectrum was obtained under measurement conditions of an excitation light power of 100 µW, an exposure time of 1 second, and a cumulative number of 1.

### Example 2

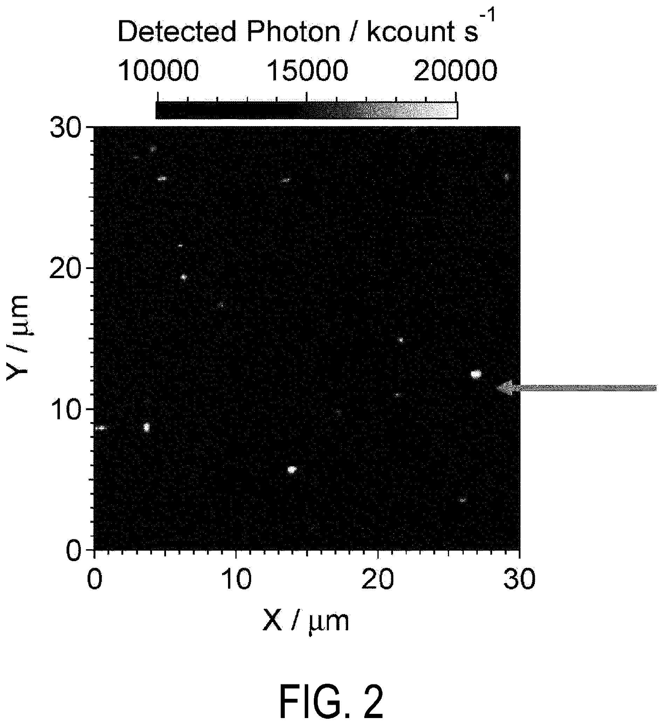

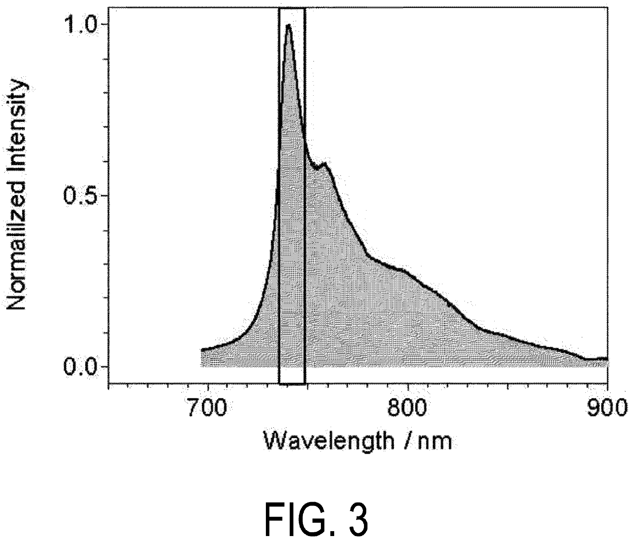

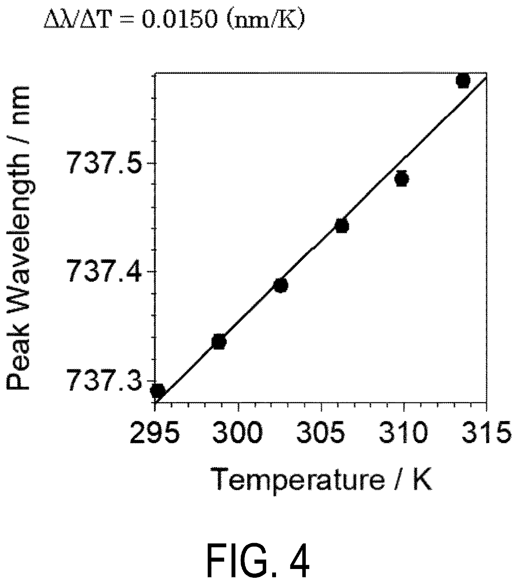

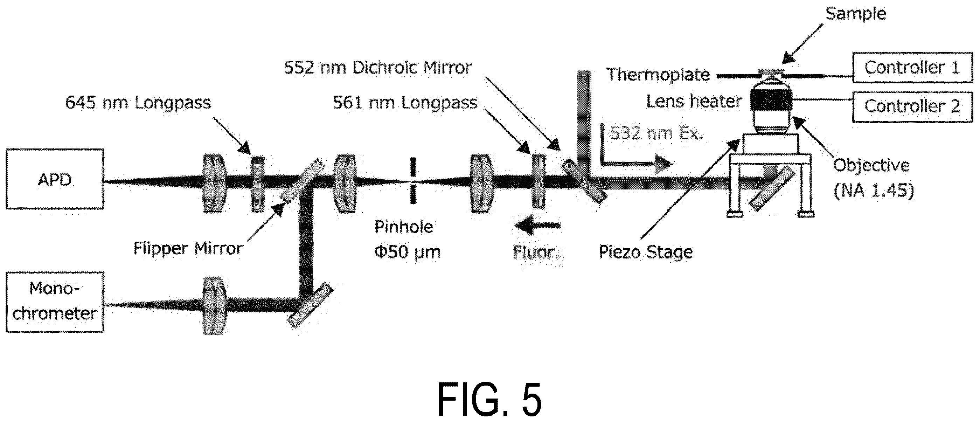

The silicon-doped nanodiamond with SiV centers obtained in Example 1 was dispersed at a concentration of 1 mass% in water. The resulting dispersion was dropped on a glass substrate and dried, and an evaluation sample was prepared. The resulting evaluation sample was subjected to high-speed mapping (excitation light wave length: 532 nm, excitation light power: 100 µW) (FIG. 2) with a confocal microscope (FIG. 5). Furthermore, the point indicated by the arrow in FIG. 2, which was a bright spot, was peaked up, and the detailed fluorescence spectrum was measured. From the detailed fluorescence spectrum, it is confirmed that the point indicated by the arrow in FIG. 2 was the fluorescence ZPL of the SiV (FIG. 3). The temperature was then adjusted with a hotplate and a lens heater attached to the confocal microscope, and measurement was performed at temperatures of 295 K (22°C), 298.5 K (25.5°C), 302.5 K (29.5°C), 306.5 K (33.5°C), 310 K (37°C), and 313 K (40°C) with an increased wavelength resolution in the region of 732.5736 to 749 nm (excitation light: 532 nm, excitation light power: 100 µW, ND filter: OD 1.0). The peak wavelengths of the point indicated by the arrow in FIG. 2 at 22°C, 25.5°C, 29.5°C, 33.5°C, 37°C, and 40°C were measured (FIG. 4). Δλ/ΔT = 0.0150 (nm/K).

### Example 3

### (1) Synthesis of germanium-doped nanodiamond

A germanium-doped nanodiamond was produced by a detonation method according to a common procedure using TNT and cyclotrimethylenetrinitramine (hexogen, RDX) as the explosives and using 0.6 g of tetraphenylgermane relative to 60 g of the mixture of TNT and RDX under conditions of a temperature of 4092 K and a pressure of 32 GPa. As a result, a nanodiamond doped with 1% of germanium as determined by (Ge atoms/C atoms) x 100 (%) and having GeV centers was obtained.

### Example 4

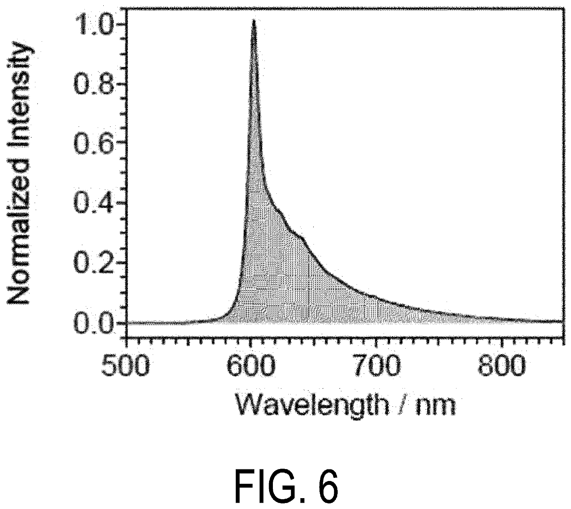

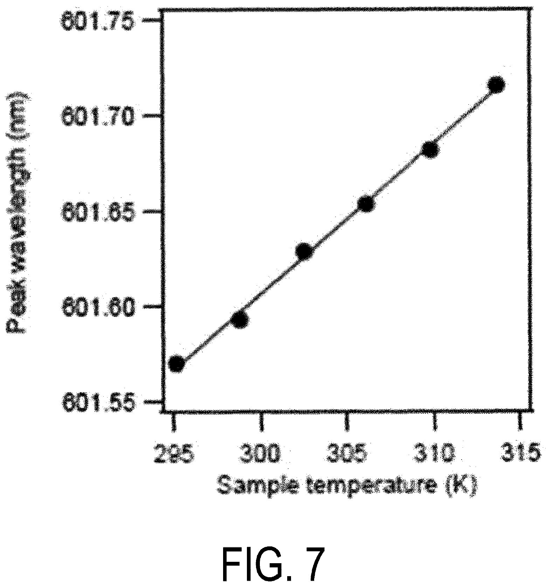

The germanium-doped nanodiamond with GeV centers obtained in Example 3 was dispersed at a concentration of 1 mass% in water. The resulting dispersion was dropped on a glass substrate and dried, and an evaluation sample was prepared. The resulting evaluation sample was subjected to high-speed mapping (excitation light wave length: 532 nm, excitation light power: 100 µW) with a confocal microscope (FIG. 5). Furthermore, a point, which was a bright spot, was peaked up, and the detailed fluorescence spectrum was measured. From the detailed fluorescence spectrum, it is confirmed that the point was the fluorescence ZPL of the GeV (FIG. 6). The temperature was then adjusted with a hotplate and a lens heater attached to the confocal microscope, and measurement was performed at temperatures of 295 K (22°C), 298.5 K (25.5°C), 302.5 K (29.5°C), 306.5 K (33.5°C), 310 K (37°C), and 313 K (40°C) with an increased wavelength resolution in the region of 597 to 607 nm (excitation light: 532 nm, excitation light power: 100 µW, ND filter: OD 1.0). The peak wavelengths of the point at 22°C, 25.5°C, 29.5°C, 33.5°C, 37°C, and 40°C were measured (FIG. 7). Δλ/ΔT = 0.0079 (nm/K).

## Claims

1. A temperature-sensitive probe for intracellular temperature measurement comprising group 14 element-doped nanodiamond particles including MV centers, wherein M represents a group 14 element selected from the group consisting of Si, Ge, Sn, and Pb, and V represents a vacancy, **characterised in that** the group 14 element-doped nanodiamond particles have an average particle size of 1 to 100 nm.

2. The temperature-sensitive probe according to claim 1, wherein M is Si.

3. The temperature-sensitive probe according to claim 1 or 2, wherein a standard relative deviation (RSD) of the particle size is from 25 to 40%.

4. The temperature-sensitive probe according to any one of claims 1 to 3, wherein the group 14 element-doped nanodiamond particles have a spherical shape.

5. The temperature-sensitive probe according to any one of claims 1 to 4, wherein a concentration of the MV centers is 1 x 10¹⁴/cm³ or higher.

6. Use of group 14 element-doped nanodiamond particles for measurement of a temperature in a micro space, wherein the micro space is a cell or an intracellular organelle, the nanodiamond . particles having an average particle size of 1 to 100 nm and comprising MV centers, wherein M represents a group 14 element selected from the group consisting of Si, Ge, Sn, and Pb, and V represents a vacancy.

## Patentansprüche

1. Temperaturempfindliche Sonde zur intrazellulären Temperaturmessung, welche mit einem Element der Gruppe 14 dotierte Nanodiamantpartikel umfasst, welche MV-Zentren enthalten, wobei M ein Element der Gruppe 14 darstellt, welches aus der Gruppe, die aus Si, Ge, Sn und Pb besteht, ausgewählt ist und V eine Leerstelle darstellt, **dadurch gekennzeichnet, dass** die mit einem Element der Gruppe 14 dotierten Nanodiamantpartikel eine durchschnittliche Partikelgröße von 1 bis 100 nm aufweisen.

2. Temperaturempfindliche Sonde gemäß Anspruch 1, wobei M Si ist.

3. Temperaturempfindliche Sonde gemäß Anspruch 1 oder 2, wobei eine relative Standardabweichung (RSD) der Partikelgröße zwischen 25 und 40 % liegt.

4. Temperaturempfindliche Sonde gemäß einem der Ansprüche 1 bis 3, wobei die mit Elementen der Gruppe 14 dotierten Nanodiamantpartikel eine kugelförmige Gestalt aufweisen.

5. Temperaturempfindliche Sonde gemäß einem der Ansprüche 1 bis 4, wobei eine Konzentration der MV-Zentren 1 × 10¹⁴/cm³ oder höher beträgt.

6. Verwendung von mit Elementen der Gruppe 14 dotierten Nanodiamantpartikeln zur Messung einer Temperatur in einem Mikroraum, wobei der Mikroraum eine Zelle oder eine intrazelluläre Organelle ist, wobei die Nanodiamantpartikel eine durchschnittliche Partikelgröße von 1 bis 100 nm aufweisen und MV-Zentren umfassen, wobei M ein Element der Gruppe 14 darstellt, das aus der Gruppe, die aus Si, Ge, Sn und Pb besteht, ausgewählt ist und V eine Leerstelle darstellt.

## Revendications

1. Sonde sensible à la température pour une mesure de température intracellulaire comprenant des particules de nanodiamant dopées par un élément du groupe 14 incluant des centres MV, dans laquelle M représente un élément du groupe 14 choisi dans le groupe constitué de Si, Ge, Sn et Pb, et V représente une vacance, **caractérisée en ce que**
les particules de nanodiamant dopées par un élément du groupe 14 présentent une taille de particule moyenne de 1 à 100 nm.

2. Sonde sensible à la température selon la revendication 1, dans laquelle M est du Si.

3. Sonde sensible à la température selon la revendication 1 ou 2, dans laquelle un écart relatif standard (RSD) de la taille de particule est de 25 à 40 %.

4. Sonde sensible à la température selon l'une quelconque des revendications 1 à 3, dans laquelle les particules de nanodiamant dopées par un élément du groupe 14 présentent une forme sphérique.

5. Sonde sensible à la température selon l'une quelconque des revendications 1 à 4, dans laquelle une concentration des centres MV est de 1 x 10¹⁴/cm³ ou plus.

6. Utilisation de particules de nanodiamant dopées par un élément du groupe 14 pour mesurer une température dans un micro-espace, dans lequel le micro-espace est une cellule ou un organite intracellulaire, les particules de nanodiamant présentant une taille de particule moyenne de 1 à 100 nm et comprenant des centres MV, dans laquelle M représente un élément du groupe 14 choisi dans le groupe constitué de Si, Ge, Sn et Pb, et V représente une vacance.
